# EUROPEAN PATENT APPLICATION

(11) **EP 4 742 834 A1**
(43) Date of publication of application: **13.05.2026**
(21) Application number: 24845713.7
(22) Date of filing: 26.02.2024
(51) Int. Cl.: H05B 6/64, H05B 6/68, H05B 6/72, H05B 3/00, A23L 5/30, A47J 37/06, F24C 7/02

(54) **COOKING APPLIANCE**

(30) Priority: 25.07.2023 KR 20230096916
(71) Applicant: LG Electronics Inc., Yeongdeungpo-gu Seoul 07336 (KR)
(72) Inventor: CHAE, Yunbyung, Seoul 08592 (KR); YANG, Jaekyung, Seoul 08592 (KR); SIM, Sunghun, Seoul 08592 (KR); HA, Junghyeong, Seoul 08592 (KR); LEE, Suyong, Seoul 08592 (KR)
(74) Representative: Ter Meer Steinmeister & Partner
(86) International application number: PCT/KR2024/002442
(87) International publication number: WO 2025/023409

(57) **Abstract**

A cooking appliance according to an embodiment of the present disclosure may include: a case forming a cavity in which a load is placed; an antenna configured to radiate radio frequency (RF) energy for heating the load; an RF generator configured to deliver an RF output to the antenna; and a controller configured to receive information related to the load, and set at least one of a target time, which is a total duration for heating the load, and a target temperature, which is a final temperature for heating the load, based on the information related to the load.

## Description

### [Technical Field]

The present disclosure relates to a cooking appliance, and more specifically, to a cooking appliance that performs sous-vide cooking.

### [Background Art]

Various types of cooking utensils for heating food in homes or restaurants are being used. Conventionally, gas ranges using gas as fuel have been widely distributed and used, but recently, devices that heat an object to be heated, for example, a cooking vessel such as a pot, using electricity instead of gas have been distributed.

Methods of heating an object to be heated using electricity are largely divided into a resistance heating method and an induction heating method. The electric resistance method is a method of heating an object to be heated by transferring heat generated when a current flows through a metal resistance wire or a non-metallic heating element such as silicon carbide to an object (e.g., a cooking vessel) through radiation or conduction. The induction heating method is a method of heating the object itself by generating an eddy current in an object made of a metal component using a magnetic field generated around a coil when high-frequency power of a predetermined magnitude is applied to the coil.

Meanwhile, recently, various cooking methods such as sous-vide have emerged, and cases of spreading to the general public are increasing.

Sous-vide is a cooking method for maintaining nutrients, texture, and taste at their best through a low-temperature vacuum cooking method.

Conventional sous-vide methods using an oven are classified into a water bath type and a steam type. The water bath type is a method of cooking ingredients by heating both water and a container in which the ingredients are contained. In addition, the steam type is a method of cooking ingredients by heating the entire oven chamber with steam or air.

Such water bath and steam types of sous-vide methods have problems in that energy consumption is high and it takes a long time.

### [Invention]

### [Technical Problem]

The present disclosure is to provide a cooking appliance that efficiently performs sous-vide cooking using RF energy for sous-vide cooking.

The present disclosure is to provide a cooking appliance that efficiently performs sous-vide cooking using RF energy and thermal energy.

### [Technical Solution]

A cooking appliance according to an embodiment of the present disclosure may include: a case forming a cavity in which a load is placed; an antenna configured to radiate RF energy to heat the load; an RF generator configured to deliver RF power to the antenna; and a controller configured to receive information related to the load, and set at least one of a target time, which is a total duration for heating the load, and a target temperature, which is a final temperature of the load, based on the information related to the load.

The information related to the load received by the cooking appliance according to an embodiment of the present disclosure may include at least one of a type of the load, a weight of the load, and a thickness of the load.

The cooking appliance according to an embodiment of the present disclosure may further receive a target doneness level, which is a final degree of cooking of the load, and set at least one of the target time and the target temperature based on the target doneness level.

The cooking appliance according to an embodiment of the present disclosure may obtain a frequency of the RF energy radiated by the antenna and an RF reflectance, which is a ratio of RF energy reflected from the cavity relative to the RF energy radiated by the antenna, and adjust the frequency of the RF energy based on the RF reflectance.

The cooking appliance according to an embodiment of the present disclosure may determine a scanned frequency as a heating frequency when the RF reflectance is less than a preset threshold, and change the frequency of the RF energy when the reflectance is greater than or equal to the preset threshold.

The cooking appliance according to an embodiment of the present disclosure may further include an IR sensor configured to measure a surface temperature of the load, and the controller may estimate a core temperature of the load based on the surface temperature of the load and obtain the core temperature of the load as the temperature of the load.

The cooking appliance according to an embodiment of the present disclosure may adjust the RF power based on heating temperature data including the temperature of the load and a reference heating temperature.

The cooking appliance according to an embodiment of the present disclosure may further include a heater configured to generate thermal energy, and the controller may control whether the heater is turned on or off based on the temperature of the load and the target temperature.

The cooking appliance according to an embodiment of the present disclosure may perform a first heating operation of heating the load by turning on the RF generator and the heater or a second heating operation of heating the load by turning on the RF generator and selectively turning on the heater.

The cooking appliance according to an embodiment of the present disclosure may, upon obtaining that the temperature of the load has reached the target temperature during the first heating operation, terminate the first heating operation by turning off the heater and initiate the second heating operation.

The cooking appliance according to an embodiment of the present disclosure may turn on the power of the heater upon obtaining that the temperature of the load is less than the target temperature during the second heating operation, and turn off the power of the heater upon obtaining that the temperature of the load is greater than or equal to the target temperature.

The cooking appliance according to an embodiment of the present disclosure may terminate the second heating operation when a duration for heating the load reaches the target time.

### [Effect of the Invention]

The cooking appliance according to an embodiment of the present disclosure can save time and energy compared to the conventional sous-vide method using an oven.

The cooking appliance according to an embodiment of the present disclosure can maximize convenience because it can heat a load by automatically setting at least one of a target temperature and a target time.

### [Description of Drawings]

FIG. 1 is a control block diagram of a cooking appliance according to an embodiment of the present disclosure.
FIG. 2 is a flowchart for describing an operation method of a cooking appliance according to an embodiment of the present disclosure.
FIG. 3 is an example of heating temperature data used by a cooking appliance according to an embodiment of the present disclosure to adjust RF power.
FIG. 4 is a flowchart showing an operation method of a cooking appliance according to an embodiment of the present disclosure.
FIG. 5 is a table including RF power set according to the weight of the load, the thickness of the load, and the target time.
FIG. 6 is a flowchart for describing an operation method of a cooking appliance according to an embodiment of the present disclosure.
FIG. 7 is a view showing a cross-section of a load according to a doneness level of the load.
FIG. 8 is a graph showing heating temperature and heating time according to the doneness level of the load.
FIG. 9 is a table showing a target time set by the cooking appliance according to a target doneness level.
FIG. 10 is a table for comparing cooking times of a cooking appliance according to an embodiment of the present disclosure and a conventional cooking appliance.

### [Best Mode]

Hereinafter, embodiments related to the present disclosure will be described in more detail with reference to the drawings. The suffixes "module" and "unit" for components used in the following description are given or used interchangeably only in consideration of ease of writing the specification, and do not themselves have distinct meanings or roles.

Hereinafter, a cooking appliance and an operation method thereof according to an embodiment of the present disclosure will be described. The cooking appliance described in this specification may include various devices that heat a load using RF (Radio Frequency) energy.

In addition, the cooking appliance described in this specification may include various devices that further heat a load by using thermal energy according to an embodiment.

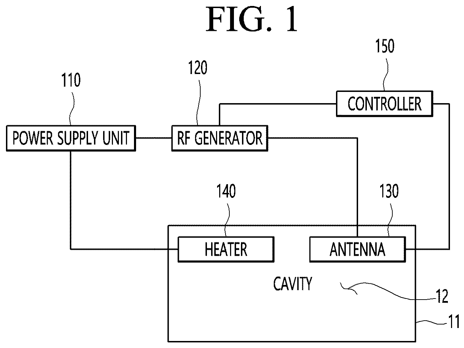

With reference to FIG. 1, a cooking appliance for heating an object to be heated using RF energy and thermal energy will be described.

FIG. 1 is a control block diagram of a cooking appliance according to an embodiment of the present disclosure.

The cooking appliance 10 according to an embodiment of the present disclosure may include some or all of a housing 11, a power supply unit 110, an RF generator 120, an antenna 130, a heater 140, and a controller 150.

The housing 11 may be a case of the cooking appliance 10. A cavity 12 may be formed in the housing 11. The cavity 12 may be a space inside the housing. A load such as food may be placed inside the cavity 12.

The power supply unit 110 may supply power to at least one of the RF generator 120 and the heater 140.

The RF generator 120 may generate RF power for heating the load using the power supplied from the power supply unit 110. The RF generator 120 may output RF power through the antenna 130. Accordingly, the antenna 130 may radiate RF energy. The RF power output by the RF generator 120 may be an RF output.

The antenna 130 may be located in the cavity 12 formed in the case 11. The antenna 130 may receive RF power from the RF generator 120. Accordingly, the antenna 130 may radiate RF energy into the cavity 12. The RF energy radiated by the antenna 130 may heat the load inside the cavity 12.

The heater 140 may be a heat source for heating the load using thermal energy. The heater 140 may generate thermal energy for heating the load using the power supplied from the power supply unit 110. The heater 140 may discharge the generated thermal energy into the cavity 12. The heat discharged by the heater 140 may heat the inside of the cavity 12.

The controller 150 may control the overall operation of the cooking appliance 10.

The controller 150 may adjust the RF power generated by the RF generator 120. In addition, the controller 150 may adjust the RF output outputted by the RF generator 120. In addition, the controller 150 may adjust the frequency of the RF energy.

The controller 150 may control the on/off state of the heater 140.

The cooking appliance 10 according to an embodiment of the present disclosure may be an RF oven that heats a load using RF energy.

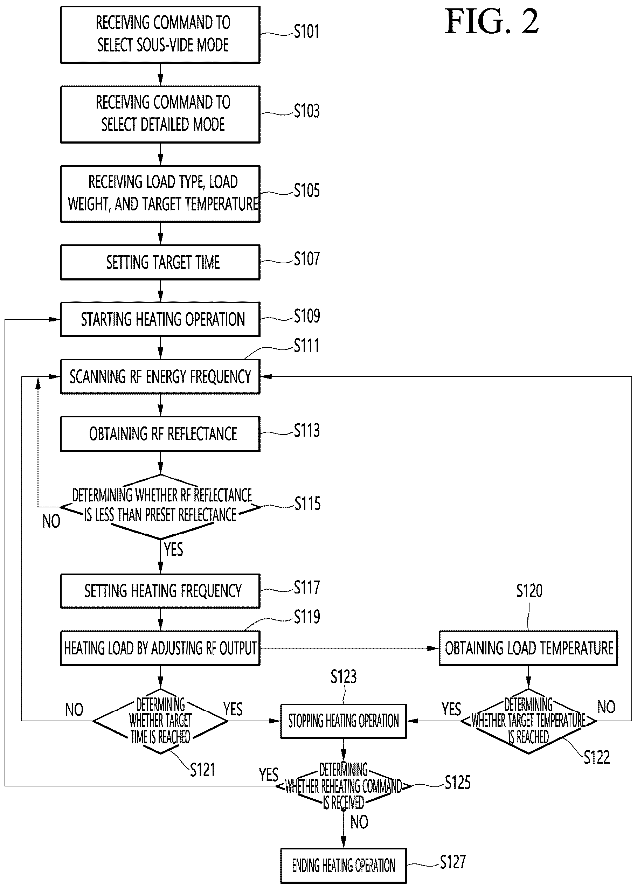

In this regard, it will be described with reference to FIG. 2.

FIG. 2 is a flowchart for describing an operation method of a cooking appliance according to an embodiment of the present disclosure.

The controller 150 may receive a command to select a sous-vide mode among heating modes (step S101).

The controller 150 may heat the load according to the selected heating mode. For example, the heating mode may include a sous-vide mode, a defrosting mode, and the like. The types of heating modes may vary according to embodiments. A user may select any one of the heating modes according to a desired cooking method.

The cooking appliance 10 may heat the load by differently adjusting the type of energy, output, cooking time, and the like, used for heating in response to the selected heating mode.

Upon receiving a command to select the sous-vide mode, the controller 150 may receive a command to select any one of the detailed modes (step S103).

The cooking appliance 10 may heat the load by differently adjusting the type of energy, output, cooking time, and the like, used for the sous-vide method in response to the selected detailed mode.

The detailed mode may include at least some of a quick mode, a normal mode, and a high-quality mode. However, the types of detailed modes may vary according to embodiments.

The time for completing sous-vide cooking may take longer in the order of quick mode, normal mode, and high-quality mode. For example, under the condition that the type of load is beef steak and the weight of the load is 1kg, the time for completing sous-vide cooking may be 1 hour for the quick mode, 2 hours for the normal mode, and 3 hours for the high-quality mode.

Due to the characteristics of the sous-vide method, the longer the time spent on cooking, the higher the quality of the cooked food. Therefore, the quality of the sous-vide dish may be high in the order of quick mode, normal mode, and high-quality mode.

The user may select any one of the detailed modes considering the cooking time and food quality.

The controller 150 may receive at least one of the type of the load, the weight of the load, and a target temperature (step S105).

The controller 150 may receive an input of at least one of the type of the load, the weight of the load, and the target temperature.

The type of load may be a type of food including meat, poultry, fish, vegetables, and the like. For example, the type of load may include chicken breast, beef steak, and the like.

The target temperature may be a final temperature for heating the load.

Meanwhile, the step S103 of receiving a command to select any one of the detailed modes and the step S105 of receiving the type of load, the weight of the load, and the target temperature may be performed simultaneously.

The controller 150 may set a target time (step S107).

The controller 150 may set the target time based on at least one of the selected detailed mode, the type of the load, the weight of the load, and the target temperature.

The target time may be a total duration for heating the load to complete the dish. The target time may be the duration from the point when the cooking appliance 10 starts the heating operation to the point when the heating operation ends.

The controller 150 may set the target time shorter in the order of quick mode, normal mode, and high-quality mode under the condition that the type and weight of the load are the same.

The controller 150 may set the target time shorter as the target temperature is higher under the condition that the selected detailed mode, the type of the load, and the weight of the load are the same.

Accordingly, the cooking appliance 10 according to an embodiment of the present disclosure has an advantage in that an optimal target time may be automatically set even when the user does not know the time required for cooking.

The controller 150 may start the heating operation (step S109).

The controller 150 may start the heating operation of heating the load using RF energy.

Meanwhile, in the case of the cooking appliance 10 using RF energy, it may not include a turntable (not shown). A turntable (not shown) may be a device that rotates a load in a microwave oven to uniformly heat the load.

Therefore, instead of not including a turntable (not shown), the controller 150 may adjust the frequency of RF energy to uniformly heat the load.

In this regard, it will be described in detail with reference to steps S111 to S117.

The controller 150 may scan the frequency of RF energy (step S111).

The controller 150 may scan the frequency of RF energy radiated into the cavity 12 by the antenna 130. The controller 150 may scan the frequency of the RF energy through a scanner (not shown).

At this time, the RF power may be output at less than a predetermined intensity to prevent damage to components inside the cooking appliance 10 during the frequency scanning process.

The controller 150 may obtain an RF reflectance (step S113).

The RF reflectance may be a ratio of RF energy reflected from the cavity 12 among the RF energy radiated into the cavity 12 by the antenna 130.

For example, the controller 150 may obtain a ratio of RF energy reflected back to the antenna 130 among the RF energy radiated by the antenna 130. Alternatively, the controller 150 may obtain a ratio of RF energy radiated by one antenna 130 and reflected to another antenna 130.

The controller 150 may obtain whether the obtained RF reflectance is greater than or equal to a preset reflectance (step S115).

A lower RF reflectance may mean that more RF energy penetrates the load. Therefore, the lower the RF reflectance, the higher the efficiency of the RF energy heating the load.

For example, the preset reflectance may be 50%. However, this is only an example, and the preset reflectance may be variously determined in consideration of target heating efficiency or the time required to obtain heating energy.

When the RF reflectance is less than the preset reflectance, the controller 150 may determine the scanned frequency of the RF energy as a heating frequency (step S117).

The controller 150 may heat the load using RF energy having the heating frequency.

Meanwhile, when the RF reflectance is greater than or equal to the preset reflectance, the controller 150 may change the frequency of the RF energy and return to step S111.

The controller 150 may repeat steps S111 to S117 until the RF reflectance is obtained to be less than the preset reflectance.

The controller 150 may adjust the RF output based on heating temperature data (step S119).

Specifically, the controller 150 may adjust the RF output based on the heating temperature data and the temperature of the load.

The heating temperature data may be data including an optimal heating temperature according to the heating time. The heating time may be a point in time elapsed from the point in time when the heating operation was started to the present.

The heating temperature data may be data including an optimal heating temperature considering at least one of a heating mode, a detailed heating mode, a type of load, a weight of the load, and a target time.

The heating temperature data may be stored inside or outside the cooking appliance 10. When the heating temperature data is stored outside the cooking appliance 10, the controller 150 may receive the heating temperature data from the outside.

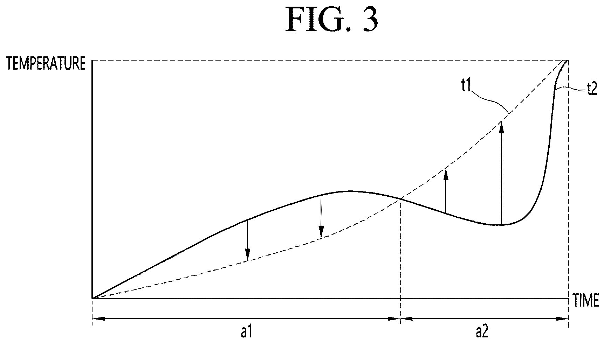

Regarding an example of heating temperature data, it will be described with reference to FIG. 3.

FIG. 3 is an example of heating temperature data used by a cooking appliance to adjust RF power according to an embodiment of the present disclosure.

The heating temperature data may include a reference heating temperature t1.

The reference heating temperature t1 may be an optimal temperature for heating the load for each heating time. The reference heating temperature t1 may vary according to heating conditions. For example, the reference heating temperature t1 may vary according to at least one of the type of the load, the weight of the load, and the thickness of the load. In addition, the reference heating temperature t1 may vary according to at least one of a target doneness level and a target time.

The controller 150 may obtain a temperature t2 of the load.

Specifically, the controller 150 may estimate the temperature t2 of the load using a temperature sensed by an IR sensor (not shown). The IR sensor (not shown) may sense the surface temperature of the load. The controller 150 may estimate the core temperature of the load based on the surface temperature of the load sensed by the IR sensor (not shown). The controller 150 may obtain the estimated temperature as the temperature t2 of the load.

The controller 150 may adjust the RF power based on the reference heating temperature t1 and the temperature t2 of the load. For example, the controller 150 may adjust the RF output using an SSPM (Solid State Power Module), but the method by which the controller 150 adjusts the RF output is not limited thereto. When the temperature t2 of the load is higher than the reference heating temperature t1 as in a first section a1, the controller 150 may lower the RF output to lower the temperature t2 of the load to the reference heating temperature t1.

In addition, when the temperature t2 of the load is lower than the reference heating temperature t1 as in a second section a2, the controller 150 may increase the RF output to increase the temperature t2 of the load to the reference heating temperature t1.

The controller 150 may adjust the RF output to 200W or less. Accordingly, the cooking appliance 10 according to an embodiment of the present disclosure may perform sous-vide cooking while heating the load with a low power of 200W or less.

For example, the controller 150 may adjust the RF output in the range of 50W to 200W. However, the range of RF power adjusted by the controller 150 may vary according to embodiments. The controller 150 may adjust the RF output between a minimum power for heating the load and a maximum power for maintaining the characteristics of sous-vide cooking.

As the controller 150 heats the load by adjusting the heating frequency and the RF output, it may heat the load with optimal efficiency.

FIG. 2 will be described again.

The controller 150 obtains whether the heating time has reached the target time (step S121), and in the case that it is obtained that the heating time has reached the target time, the controller 150 may stop the heating operation (step S123).

In the case that it is obtained that the heating time has not reached the target time, the controller 150 may return to step S111. The controller 150 may repeat steps S111 to S121 until it is obtained that the heating time has reached the target time.

The controller 150 obtains the temperature of the load S120 and may obtain whether the temperature of the load has reached the target temperature (step S122). When it is obtained that the temperature of the load has reached the target temperature, the controller 150 may stop the heating operation (step S123).

In addition, in the case that it is obtained that the temperature of the load has not reached the target temperature, the controller 150 may return to step S111. The controller 150 may repeat steps S111 to S122 until it is obtained that the temperature of the load reaches the target temperature.

That is, the controller 150 may heat the load by adjusting the heating frequency and the RF output until the target time or target temperature is reached.

This is because the moisture content of the load changes as the load is heated, and accordingly, the amount of the load changes, so the optimal frequency for heating the load may vary.

According to an embodiment, after stopping the heating operation, the controller 150 may output a notification informing that the heating operation has stopped. Accordingly, the user may recognize that the heating has stopped and may visually check whether the cooking is complete.

The user may start RF heating by inputting a reheating command or take the load out of the case 11 depending on whether cooking is complete.

In the case that a reheating command is not received, the controller 150 may terminate heating (step S37).

Meanwhile, upon receiving a reheating command, the controller 150 may return to step S109 to start the heating operation.

Summarizing FIG. 2, the cooking appliance 10 according to an embodiment of the present disclosure may perform sous-vide cooking using RF energy. Accordingly, the cooking appliance 10 according to an embodiment of the present disclosure may use a low power of 200W or less.

Accordingly, it is possible to perform sous-vide cooking quickly while simultaneously solving the non-uniform heating problem that occurs during high power output in a general oven.

In addition, due to RF characteristics, penetration into the interior of the load is possible, so that sous-vide cooking may be easily performed even when the thickness of the load is thick, such as thick meat. In addition, microorganisms inside the load may be killed.

And, since it is not necessary to heat the entire cavity 12, power consumption is lower than that of the sous-vide method using a conventional oven, thereby saving energy.

Meanwhile, the cooking appliance 10 according to an embodiment of the present disclosure may perform sous-vide cooking using both RF energy and thermal energy.

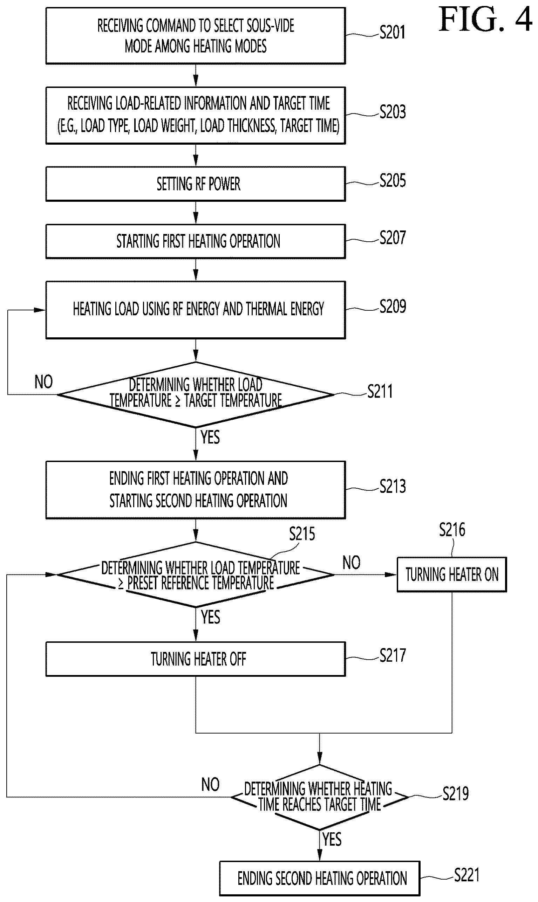

In this regard, it will be described with reference to FIG. 4.

FIG. 4 is a flowchart for describing an operation method of a cooking appliance according to an embodiment of the present disclosure.

The controller 150 may receive a command to select a sous-vide mode among heating modes (step S201).

Step S201 may be the same step as step S101 of FIG. 2.

The controller 150 may receive the type of the load, the weight of the load, the thickness of the load, and a target time (step S203).

Compared with step S105 of FIG. 2, the controller 150 may further receive the thickness of the load and the target time.

The controller 150 may set the RF power (step S205).

The controller 150 may set the RF power based on at least one of the type of the load, the weight of the load, the thickness of the load, and the target time.

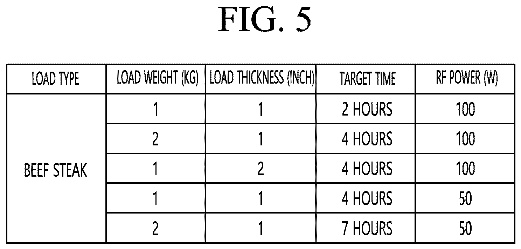

In this regard, it will be described with reference to FIG. 5.

FIG. 5 is a table including RF power set according to the weight of the load, the thickness of the load, and the target time.

The types of loads in FIG. 5 may all be the same as beef steak.

The controller 150 may set the RF power higher as the weight of the load is heavier.

When the weight of the load is 2kg, the thickness of the load is 1 inch, and the target time is 4 hours, the controller 150 may set the RF power to 100W. When the weight of the load is 1kg, the thickness of the load is 1 inch, and the target time is 4 hours, the controller 150 may set the RF power to 50W.

The controller 150 may set the RF power higher as the target time is shorter.

When the weight of the load is 1kg, the thickness of the load is 1 inch, and the target time is 2 hours, the controller 150 may set the RF power to 100W. When the weight of the load is 1kg, the thickness of the load is 1 inch, and the target time is 4 hours, the controller 150 may set the RF power to 50W.

As described above, the cooking appliance 10 according to an embodiment of the present disclosure has an advantage in that the RF power may be automatically set even when the user does not know the appropriate RF power.

FIG. 4 will be described again.

The controller 150 may start a first heating operation (step S207).

The controller 150 may perform a first heating operation of heating the load by turning on both the RF generator 120 and the heater 140.

When the first heating operation is started, the controller 150 may heat the load using both RF energy and thermal energy (step S209).

The controller 150 may heat the load by adjusting the RF power in the same manner as in steps S111 to S119 of FIG. 2.

RF energy radiated by the antenna 130 may penetrate into the interior of the load to heat the load.

At the same time, the controller 150 may heat the load using the heater 140. Thermal energy discharged from the heater 140 may heat the entire interior of the cavity 12. In addition, thermal energy may heat the surface of the load.

The cooking appliance 10 according to an embodiment of the present disclosure may shorten cooking time by using different types of energy simultaneously to heat a load. In addition, since the preheating process may be omitted, the cooking time may be further shortened.

Next, the controller 150 may obtain the temperature of the load. The controller 150 may obtain the temperature of the load in the same manner as described in step S120 of FIG. 2.

The controller 150 may obtain whether the temperature of the load is greater than or equal to the target temperature (step S211).

When it is obtained that the temperature of the load is greater than or equal to the target temperature, the controller 150 terminates the first heating operation and may initiate a second heating operation (step S213).

The controller 150 may terminate the first heating operation by turning off the power of the heater 140.

The controller 150 may perform a second heating operation of turning on the power of the RF generator 120 and selectively turning on the power of the heater 140.

The second heating operation may be an operation for the cooking appliance 10 to maintain the temperature of the load close to the target temperature by selectively using thermal energy while maintaining load heating using RF energy.

When the second heating operation is started, the controller 150 may heat the load with the RF power set in step S205. However, according to an embodiment, the controller 150 may heat the load by adjusting the RF power in the same manner as in steps S111 to S119 of FIG. 2.

In addition, when the second heating operation is started, the controller 150 may control the on/off state of the heater 140 based on the temperature of the load and the target temperature. To this end, the controller 150 may obtain the temperature of the load.

The controller 150 may obtain the temperature of the load in real time.

Alternatively, the controller 150 may periodically obtain the temperature of the load. The controller 150 may obtain the temperature of the load every preset period. The period during which the controller 150 obtains the temperature of the load may be a time set in consideration of the time during which the temperature of the load increases as the heater 140 is turned on. In addition, the period during which the controller 150 obtains the temperature of the load may be a time set in consideration of the time during which the temperature of the load decreases as the heater 140 is turned off.

The controller 150 may turn on the heater 140 when the temperature of the load is less than the target temperature (step S216). In addition, the controller 150 may turn off the heater 140 when the temperature of the load is greater than or equal to the target temperature (step S217).

The controller 150 may obtain whether the heating time has reached the target time (step S219).

In the case that it is obtained that the heating time has not reached the target time, the controller 150 may repeat steps S215 to S219 until the point in time when the heating time reaches the target time.

When it is obtained that the heating time has reached the target time, the controller 150 may terminate the second heating operation (step S221).

The temperature of the load at the point in time when the controller 150 terminates the second heating operation may be the same as or close to the target temperature.

Meanwhile, after terminating the second heating operation, the controller 150 may obtain whether a reheating command is received as in step S125 of FIG. 2. Upon receiving a reheating command, the controller 150 may start either the first heating operation or the second heating operation.

Summarizing FIG. 4, the cooking appliance 10 according to an embodiment of the present disclosure may perform sous-vide cooking by using both RF energy and thermal energy or by selectively using thermal energy.

Since the cooking appliance 10 according to an embodiment of the present disclosure heats a load using a plurality of heat sources, there is an advantage that energy efficiency is maximized by shortening cooking time.

In addition, the cooking appliance 10 according to an embodiment of the present disclosure may heat while maintaining the temperature of the load at a target temperature. Accordingly, there is an advantage that high-quality sous-vide cooking is possible.

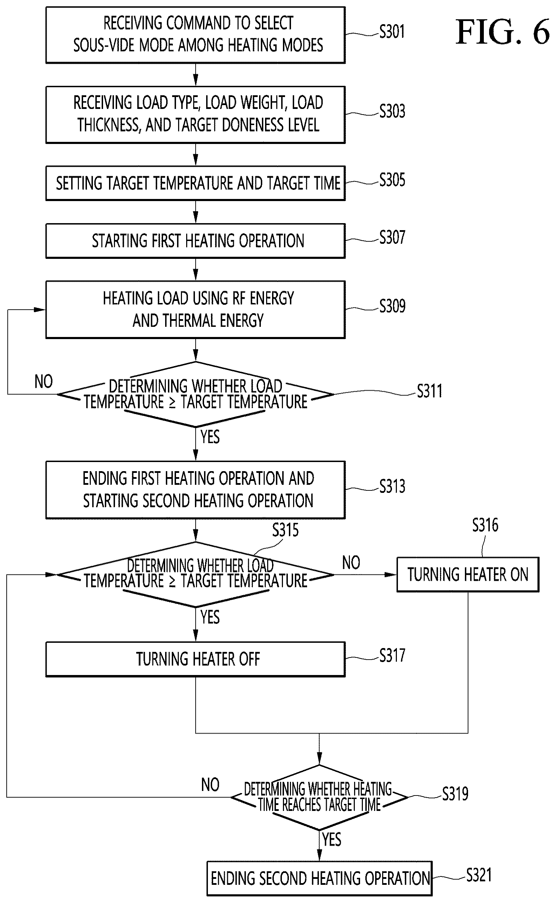

FIG. 6 is a flowchart for describing an operation method of a cooking appliance according to an embodiment of the present disclosure.

The controller 150 may receive a command to select a sous-vide mode among heating modes (step S301).

Step S301 may be the same step as step S101 of FIG. 2.

The controller 150 may receive at least one of the type of the load, the weight of the load, the thickness of the load, and a target doneness level (step S303).

Compared with step S105 of FIG. 2, the controller 150 may further receive the thickness of the load and the target doneness level. In addition, compared with step S105 of FIG. 2, the controller 150 may not receive a target temperature.

The target doneness level may be a final degree of cooking of the load after the completion of heating. The doneness level of the load may be a degree of roasting or cooking of the load.

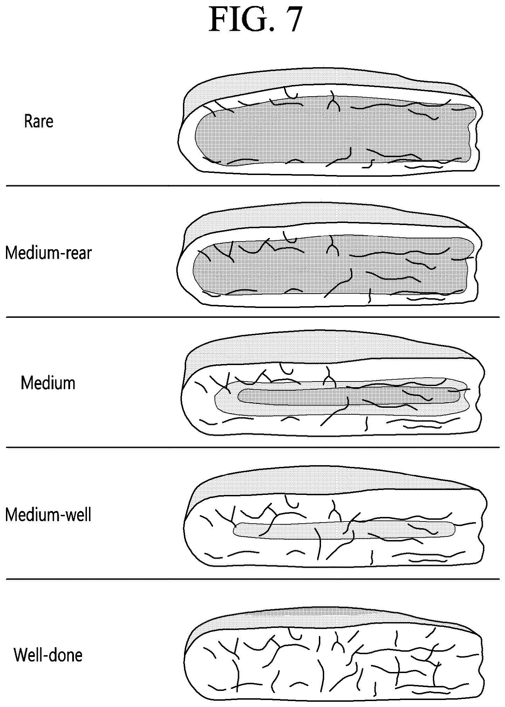

Regarding the doneness level of the load, it will be described with reference to FIG. 7.

FIG. 7 is a view showing a cross-section of a load according to a doneness level of the load.

The doneness level of the load may be classified in stages according to the degree of cooking of the load.

For example, the doneness level of the load may be classified into Rare, Medium rare, Medium, Medium Well, and Well-done in the order of lower doneness. However, the doneness level of the load may be variously classified according to embodiments.

FIG. 6 will be described again.

The controller 150 may set a target temperature and a target time (step S305).

The controller 150 may set the target temperature and the target time based on the target doneness level.

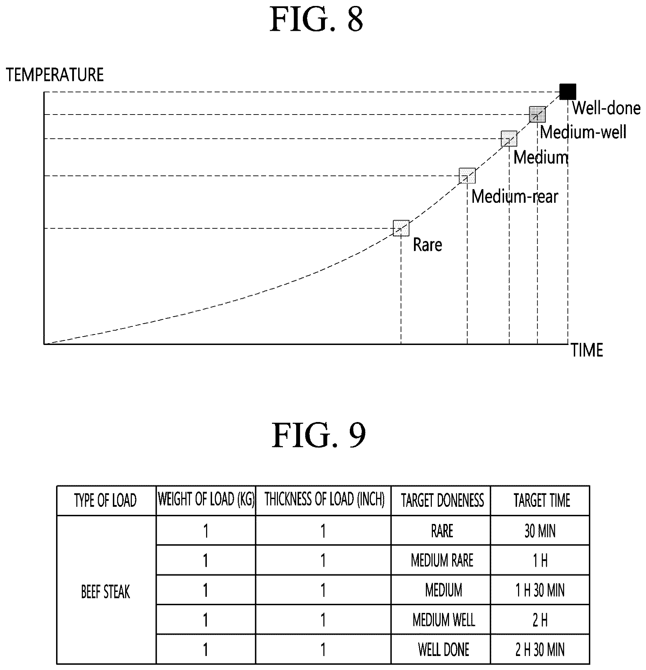

In this regard, it will be described with reference to FIG. 8.

FIG. 8 is a graph showing heating temperature and heating time according to the doneness level of the load.

As shown in FIG. 8, the doneness level of the load may be proportional to the final temperature for heating the load. In addition, the doneness level of the load may be proportional to the time for heating the load. Therefore, the controller 150 may set the target temperature and the target time based on the target doneness level.

The controller 150 may set the target temperature higher in the order of Rare, Medium Rare, Medium, Medium Well, and Well-done of the target doneness level.

For example, the controller 150 may set the target temperature to 49°C in the case that the target doneness level is Rare, set the target temperature to 54°C in the case that the target doneness level is Medium Rare, set the target temperature to 57°C in the case that the target doneness level is Medium, set the target temperature to 63°C in the case that the target doneness level is Medium Well, and set the target temperature to 69°C in the case that the target doneness level is Well-done.

However, each target temperature according to the target doneness level is only an example for convenience of description and may vary according to embodiments.

Meanwhile, the target time may be higher in the order of Rare, Medium Rare, Medium, Medium Well, and Well-done of the target doneness level.

Regarding the target time set by the cooking appliance 10 according to the target doneness level according to an embodiment of the present disclosure, it will be described in detail with reference to FIG. 9.

FIG. 9 is a table showing a target time set by the cooking appliance according to a target doneness level.

FIG. 9 is a table showing the target time set by the controller 150 according to the target doneness level when the type of load is beef steak, the weight of the load is 1kg, and the thickness of the load is 1 inch.

As the target doneness level is higher, the target time may be set longer.

When the target doneness levels are Rare, Medium Rare, Medium, Medium Well, and Well-done, the target times may be set to 30 minutes, 1 hour, 1 hour 30 minutes, 2 hours, and 2 hours 30 minutes, respectively.

FIG. 6 will be described again.

The controller 150 may start a first heating operation (step S307).

When the first heating operation is started, the controller 150 may heat the load using both RF energy and thermal energy (step S309).

The controller 150 may heat the load using both RF energy and thermal energy in the same manner as in step S207 of FIG. 4.

Next, the controller 150 may obtain the temperature of the load. The controller 150 may obtain the temperature of the load in the same manner as described in step S120 of FIG. 2.

The controller 150 may obtain whether the temperature of the load is greater than or equal to the target temperature (step S311).

When it is obtained that the temperature of the load is greater than or equal to the target temperature, the controller 150 terminates the first heating operation and may initiate a second heating operation (step S313).

The controller 150 may terminate the first heating operation by turning off the power of the heater 140.

When the second heating operation is started, the controller 150 may heat the load by adjusting the RF power in the same manner as in steps S111 to S119 of FIG. 2.

In addition, when the second heating operation is started, the controller 150 may obtain the temperature of the load in the same manner as in step S213 of FIG. 4 and control the on/off state of the heater 140 based on the obtained temperature.

The controller 150 may turn on the heater 140 when the temperature of the load is less than the target temperature (step S316). In addition, the controller 150 may turn off the heater 140 when the temperature of the load is greater than or equal to the target temperature (step S317).

The controller 150 may obtain whether the heating time has reached the target time (step S319).

In the case that it is obtained that the heating time has not reached the target time, the controller 150 may repeat steps S315 to S319 until the point in time when the heating time reaches the target time.

When it is obtained that the heating time has reached the target time, the controller 150 may terminate the second heating operation (step S321).

The temperature of the load at the point in time when the controller 150 terminates the second heating operation may be the same as or close to the target temperature.

Meanwhile, after terminating the second heating operation, the controller 150 may obtain whether a reheating command is received as in step S125 of FIG. 2. Upon receiving a reheating command, the controller 150 may start either the first heating operation or the second heating operation.

Summarizing FIG. 6, the cooking appliance 10 according to an embodiment of the present disclosure may perform sous-vide cooking by using both RF energy and thermal energy or by selectively using thermal energy.

The cooking appliance 10 according to an embodiment of the present disclosure has an advantage that the user may easily be provided with a desired dish by setting the target temperature and the target time based on the target doneness level.

Combining FIG. 2 to FIG. 8, the cooking appliance 10 according to an embodiment of the present disclosure may receive information related to a load and set at least one of a target time and a target temperature. The information related to the load may include at least one of a type of the load, a weight of the load, and a thickness of the load.

In addition, the controller 150 may receive a target doneness level, which is a final degree of cooking of the load, and set at least one of the target time and the target temperature based on the target doneness level.

In addition, the controller 150 may adjust at least one of a heating frequency and an RF output to heat the load with RF energy. In addition, the controller 150 may selectively turn on the heater 140 to heat the load with thermal energy.

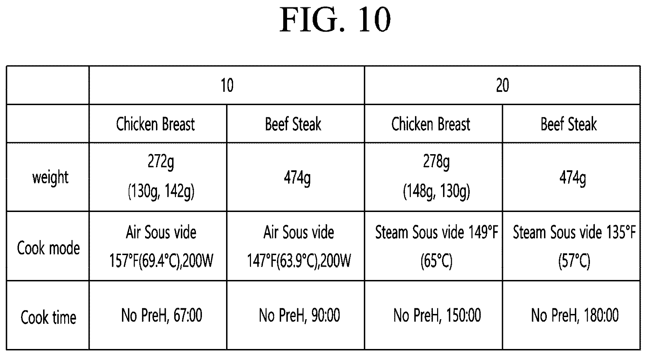

FIG. 10 is a table for comparing cooking times of a cooking appliance according to an embodiment of the present disclosure and a conventional cooking appliance.

Specifically, FIG. 10 is a table for comparing the time for heating chicken breast and beef steak by the cooking appliance 10 according to an embodiment of the present disclosure and the time for heating chicken breast and beef steak by a conventional cooking appliance 20.

When the cooking appliance 10 cooks 272g of chicken breast in a sous-vide method, the time required for cooking to be completed is 67 minutes. On the other hand, when the conventional cooking appliance 20 cooks 278g of chicken breast in a steam sous-vide method, the time required for cooking to be completed is 150 minutes. The cooking time of the cooking appliance 10 is only about 45% of the cooking time of the conventional cooking appliance 20.

When the cooking appliance 10 cooks 474g of beef steak in a sous-vide method, the time required for cooking to be completed is 90 minutes. On the other hand, when the conventional cooking appliance 20 cooks 474g of beef steak in a steam sous-vide method, the time required for cooking to be completed is 180 minutes. The cooking time of the cooking appliance 10 is only 50% of the cooking time of the conventional cooking appliance 20.

It may be confirmed that the time required for the cooking appliance 10 according to an embodiment of the present disclosure to complete sous-vide cooking is significantly shorter than the time required for the conventional cooking appliance 20 to complete sous-vide cooking.

The above description is merely illustrative of the technical idea of the present disclosure, and various modifications and variations may be made by those skilled in the art without departing from the essential characteristics of the present disclosure.

Therefore, the embodiments disclosed in the present disclosure are not intended to limit the technical idea of the present disclosure but to explain it, and the scope of the technical idea of the present disclosure is not limited by these embodiments.

The protection scope of the present disclosure should be interpreted by the following claims, and all technical ideas within the equivalent range should be interpreted as being included in the scope of rights of the present disclosure.

### [Industrial Applicability]

According to an embodiment of the present disclosure, it is possible to provide a cooking appliance that performs sous-vide cooking.

## Claims

1. A cooking appliance comprising:
a case forming a cavity in which a load is placed;
an antenna configured to radiate radio frequency (RF) energy to heat the load;
an RF generator configured to deliver RF power to the antenna; and
a controller configured to receive information related to the load, and set at least one of a target time, which is a total duration for heating the load, and a target temperature, which is a final temperature of the load, based on the received information.

2. The cooking appliance of claim 1, wherein the information related to the load includes at least one of a type, a weight, and a thickness of the load.

3. The cooking appliance of claim 1, wherein the controller is further configured to receive a target doneness level of the load, and set at least one of the target time and the target temperature based on the target doneness level.

4. The cooking appliance of claim 1, wherein the controller is configured to:
obtain a frequency of the RF energy radiated by the antenna and an RF reflectance, wherein the RF reflectance is a ratio of RF energy reflected from the cavity relative to the RF energy radiated by the antenna; and
adjust the frequency of the RF energy based on the RF reflectance.

5. The cooking appliance of claim 4, wherein the controller is configured to:
determine a scanned frequency as a heating frequency when the RF reflectance is less than a preset threshold; and
change the frequency of the RF energy when the RF reflectance is greater than or equal to the preset threshold.

6. The cooking appliance of claim 1, further comprising an infrared (IR) sensor configured to measure a surface temperature of the load,
wherein the controller is configured to estimate a core temperature of the load based on the surface temperature, and obtain the estimated core temperature as the temperature of the load.

7. The cooking appliance of claim 6, wherein the controller is configured to adjust the RF power based on heating temperature data including the temperature of the load and a reference heating temperature.

8. The cooking appliance of claim 7, wherein the controller is configured to limit the RF power to 200W or less.

9. The cooking appliance of claim 6, further comprising a heater configured to generate thermal energy,
wherein the controller is configured to control an on/off state of the heater based on the temperature of the load and the target temperature.

10. The cooking appliance of claim 9, wherein the controller is configured to perform:
a first heating operation in which the RF generator and the heater are both turned on to heat the load; or
a second heating operation in which the RF generator is turned on and the heater is selectively turned on to heat the load.

11. The cooking appliance of claim 10, wherein the controller is configured to, upon determining that the temperature of the load has reached the target temperature during the first heating operation, terminate the first heating operation by turning off the heater and initiate the second heating operation.

12. The cooking appliance of claim 11, wherein the controller is configured to: turn on the heater when the temperature of the load is less than the target temperature during the second heating operation; and turn off the heater when the temperature of the load is greater than or equal to the target temperature.

13. The cooking appliance of claim 12, wherein the controller is configured to terminate the second heating operation when a heating duration of the load reaches the target time.
